# FASCICULE DE BREVET EUROPEEN

(11) **EP 3 840 150 B1**
(45) Date de publication et mention de la délivrance du brevet: **28.01.2026**
(21) Numéro de dépôt: 20211740.4
(22) Date de dépôt: 04.12.2020
(51) Int. Cl.: H02G 3/08, H02G 3/10

(54) **EMBOUT PASSE-CABLE ETANCHE,BOITE ELECTRIQUE COMPRENANT UN TEL EMBOUT ET APPAREILLAGE ELECTRIQUE COMPORTANT UN MECANISME D'APPAREILLAGE RAPPORTE DANS UNE TELLE BOITE ELECTRIQUE**
ABGEDICHTETE KABELDURCHFÜHRUNG, ELEKTRISCHE BOX MIT EINER SOLCHEN DURCHFÜHRUNG UND ELEKTRISCHES GERÄT MIT EINEM IN EINER SOLCHEN ELEKTRISCHEN BOX MONTIERTEN GERÄTEMECHANISMUS
SEALED CABLE PASSAGE, ELECTRICAL BOX COMPRISING SUCH A CABLE PASSAGE AND ELECTRICAL APPARATUS COMPRISING AN APPARATUS MECHANISM MOUNTED IN SUCH AN ELECTRICAL BOX

(30) Priorité: 20.12.2019 FR 1915139
(43) Date de publication de la demande: 23.06.2021
(73) Titulaire: Legrand France, 87000 Limoges (FR); Legrand SNC, 87000 Limoges (FR)
(72) Inventeur: MALISCHEWSKI, Frédéric, 87700 Beynac (FR); PUYBARAUD, Eric, 87170 Isle (FR); DUMAS, Eric, 87340 La Jonchère Saint Maurice (FR); GOURINCHAS, Laurent, 87700 Aixe-sur-Vienne (FR)
(74) Mandataire: Jacobacci Coralis Harle

(56) Documents cités:
- EP-A1- 0 550 839
- EP-A1- 0 653 825
- EP-A1- 0 921 546
- EP-A1- 1 089 411
- EP-A1- 1 501 164
- EP-A1- 1 860 748
- EP-A2- 1 758 220
- EP-A2- 2 106 006
- DE-U1- 202018 104 307
- FR-A1- 2 881 285
- FR-A1- 2 881 288

## Description

La présente invention concerne de manière générale le domaine des appareillages électriques (typiquement des mécanismes de prise de courant ou de commutateur électrique).

Elle concerne plus particulièrement les appareillages électriques munis d'une boîte électrique isolante à rapporter en saille sur des parois murales, et notamment une boîte électrique étanche.

Elle concerne plus particulièrement un embout passe-câble étanche comportant une face d'entrée pour l'introduction d'un câble électrique ou d'un tube, par exemple de type IRL, ou d'une gaine électrique, par exemple de type ICTA, dans une boîte électrique pour appareillage électrique, comportant :
- une plaquette support munie d'un bord périphérique interne qui délimite une ouverture pour le passage du câble électrique,
- au moins un élément rigide s'étendant dans une zone de ladite ouverture comprise entre ledit bord périphérique interne de la plaquette support et le centre de ladite ouverture,
- une membrane d'étanchéité souple et perforable, surmoulée au moins partiellement sur ladite plaquette support, qui obture ladite ouverture et qui est adaptée à être traversée par le câble électrique.

Dans le domaine des boîtes électrique isolantes pour appareillages électriques étanches, il est nécessaire de prévoir des embouts passe-câbles autorisant l'entrée d'un câble électrique dans la boîte électrique permettant de préserver l'étanchéité de la boîte électrique, tant lorsqu'un câble est introduit par cet embout que lorsqu'il reste inutilisé.

A cet effet, il est connu d'utiliser des embouts passe-câble tel que décrit en introduction, comportant une plaquette support munie d'une ouverture fermée par une membrane déchirable. Lors de l'introduction du câble électrique, une extrémité longitudinale de celui-ci est appliquée contre la membrane. L'utilisateur perfore la membrane en poussant le câble électrique à travers celle-ci.

Il est également possible d'utiliser un câble électrique logé dans une gaine électrique de type ICTA ou un tube IRL, la gaine ou le tube étant appliqué contre la membrane lors de l'introduction de l'ensemble comprenant le câble électrique et la gaine électrique ou le tube dans la boîte électrique.

Cependant, les embouts passe-câble connus présentent l'inconvénient de comporter une membrane qui peut se déchirer de manière irrégulière, parfois en dehors des zones prévues à cet effet. L'orifice percé dans la membrane pour le passage du câble électrique ou de la gaine ou tube électrique est alors irrégulier et risque de ne pas entourer le câble électrique ou la gaine ou tube électrique de manière étanche.

Il est alors connu du document FR2881288 de munir la face avant de la membrane d'un élément rigide muni d'un organe de préhension. Avant l'insertion du câble électrique à travers la membrane, l'utilisateur saisit l'organe de préhension et tire dessus afin de retirer l'élément rigide. De cette manière, la membrane est déchirée avant l'insertion du câble électrique.

Les documents DE202018104307, EP1501164, EP0653825 et EP0550839 concernent chacun une boîte électrique ayant une membrane passe-câble intégrée à sa paroi latérale.

Les documents EP1758220, EP0921546, EP1860748, FR2881285 et EP1089411 concernent chacun une boîte électrique munie d'un embout ou un embout passe-câble classique. Le document EP2106006 concerne un élément passe-câble en deux parties comprenant une membrane fixée sur un cadre et un élément anti-arrachement assemblés.

Le but de la présente invention est donc de proposer un nouvel embout passe-câble, autorisant une introduction rapide et facile du câble électrique ou de la gaine ou tube électrique à travers l'embout et favorisant un perçage de la membrane de l'embout selon un orifice régulier et de contour contrôlé.

Plus particulièrement, on propose selon l'invention un embout conforme à la revendication 1.

Ainsi, avantageusement selon l'invention, lors de l'introduction du câble électrique dans la boîte électrique à travers la membrane, le câble électrique ou la gaine ou tube électrique prend appui sur une face externe de cette partie non recouverte de chaque élément rigide et glisse sur celle-ci.

De cette façon, l'appui du câble électrique ou de la gaine ou tube électrique s'effectue au moins partiellement sur chaque élément rigide de l'embout ce qui limite l'étirement de la membrane et le risque qu'elle ne se déchire dans des zones non prévues à cet effet ou de manière irrégulière.

D'autres caractéristiques avantageuses et non limitatives de l'invention sont énoncées dans les revendications 2 à 11.

Selon une variante, une face externe dudit élément rigide fait saillie vers l'extérieur à partir de la face externe de la membrane.

L'invention concerne également une boîte électrique conforme à la revendication 12.

Selon l'invention, la boîte électrique peut présenter les caractéristiques énoncées dans les revendications13 à 16.

L'invention concerne également un appareillage électrique conforme à la revendication 17.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique assemblée en perspective d'un appareillage électrique comprenant une boîte électrique conforme à l'invention et un enjoliveur,
- la figure 2 est une vue schématique en perspective éclatée de l'appareillage électrique de la figure 1,
- la figure 3A est une vue schématique assemblée en perspective de la boîte électrique conforme à l'invention,
- la figure 3B est une vue schématique assemblée en perspective de la boîte électrique conforme à l'invention, sans la rehausse de cette boîte électrique,
- la figure 4 est une vue schématique en perspective éclatée de la boîte électrique de la figure 3A,
- la figure 5 est une vue schématique en perspective de la partie arrière de la boîte électrique conforme à l'invention,
- la figure 6 est une vue schématique en perspective avant de l'embout passe-câble étanche de l'appareillage électrique de la figure 1,
- la figure 7 est une vue schématique en perspective arrière de l'embout passe-câble étanche de la figure 6,
- la figure 8 est une vue schématique en perspective avant de l'embout passe-câble étanche de la figure 6 sans sa membrane,
- la figure 9 est une vue schématique en perspective arrière de l'embout passe-câble étanche de la figure 6 sans sa membrane,
- la figure 10 est une vue schématique en coupe selon le plan P1 de la figure 6 de l'embout passe-câble étanche,
- la figure 11 est une vue schématique en perspective avant de l'embout passe-câble étanche de la figure 6 et d'un câble électrique approché de cet embout,
- la figure 12 est une vue schématique similaire à celle de la figure 11, dans laquelle le câble électrique est appuyé contre cet embout passe-câble,
- la figure 13 est une vue schématique similaire à celle de la figure 11, dans laquelle le câble électrique traverse la membrane de l'embout passe-câble,
- la figure 14 est une vue schématique en coupe de l'embout passe-câble et du câble électrique de la figure 11,
- la figure 15 est une vue schématique en coupe de l'embout passe-câble et du câble électrique de la figure 13,
- la figure 16 est une vue schématique en coupe de l'embout passe-câble et du câble électrique similaire à celle de la figure 15, dans laquelle le câble électrique est déplacé selon une direction perpendiculaire à l'axe longitudinal de ce câble électrique,
- la figure 17 est une vue schématique en perspective arrière d'un deuxième mode de réalisation de l'embout passe-câble étanche selon l'invention,
- la figure 18 est une vue schématique en perspective arrière d'un troisième mode de réalisation de l'embout passe-câble étanche selon l'invention.

Dans la description qui va suivre, les termes « avant » et « arrière » seront utilisés par rapport à la direction du regard d'une personne sur l'élément décrit. L'avant de cet élément désigne le côté tourné vers la personne le regardant tandis que l'arrière désigne le côté tourné vers le support sur lequel est rapporté ledit élément.

Les termes « intérieur » ou « interne » et « extérieur » ou « externe » seront utilisés en référence à la boîte électrique elle-même, pour désigner respectivement le côté d'un élément tourné vers le centre de la boîte électrique et le côté d'un élément tourné vers l'extérieur de cette boîte.

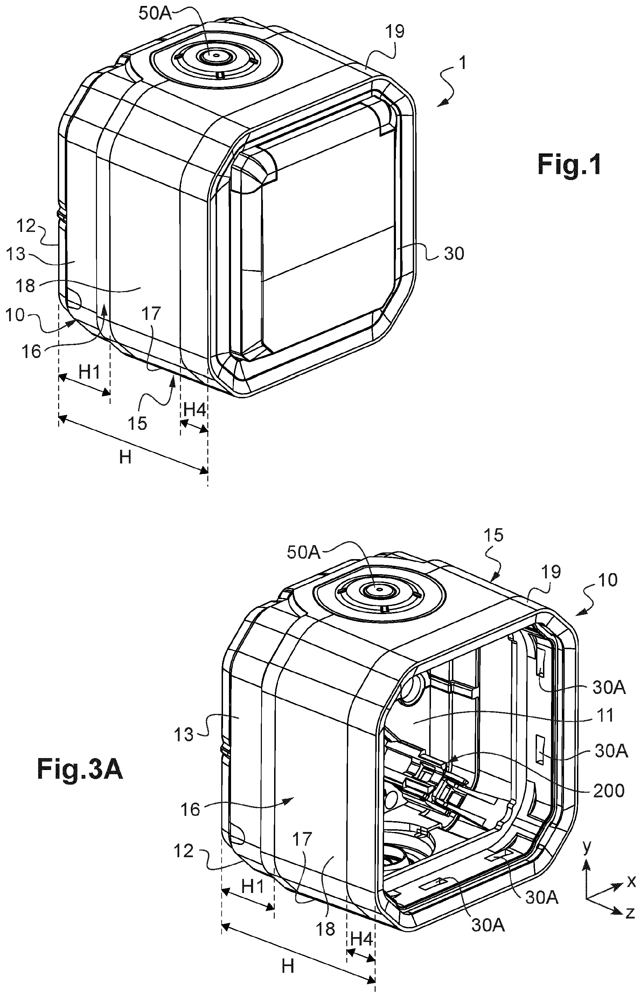

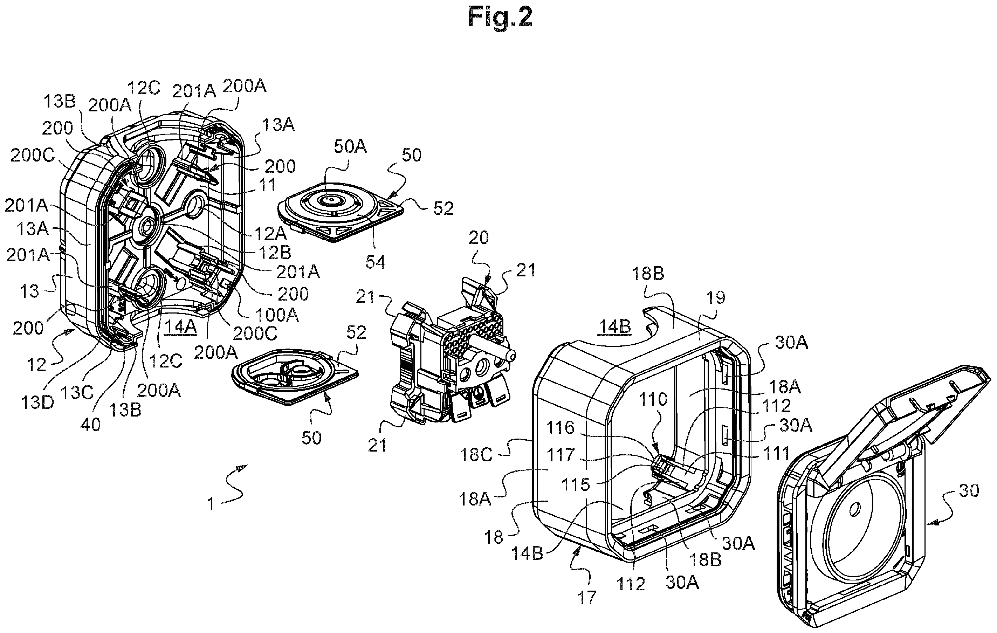

Sur les figures 1 et 2, on a représenté un appareillage électrique 1 comprenant une boîte électrique 10 conforme à l'invention, un mécanisme d'appareillage électrique 20 reçu dans un logement délimité dans la boîte électrique 10 et un enjoliveur 30 qui ferme l'ouverture avant de la boîte électrique 10 par laquelle on accède à l'intérieur dudit logement et qui confère sa fonction à l'appareillage électrique 1.

La boîte électrique 10 représentée sur les figures 1 à 4 est une boîte électrique étanche à rapporter en saillie sur une paroi murale et agencée pour recevoir intérieurement le mécanisme d'appareillage électrique 20. Ce mécanisme d'appareillage électrique 20 est ici un mécanisme de prise de courant (figure 2) mais il pourrait s'agit de manière similaire d'un mécanisme de commutateur électrique, ou bien encore d'un mécanisme de détection.

Comme le montrent les figures 1 et 3A, la boîte électrique 10 comprend un corps 15 qui présente ici une forme globalement parallélépipédique. Il pourrait présenter une forme différente, par exemple cylindrique.

Ce corps 15 comprend une paroi latérale 16, de hauteur H3, qui est fermée à l'arrière par une paroi de fond 11. La paroi latérale 16 et la paroi de fond 11 délimitent un logement de réception adapté à recevoir le mécanisme d'appareillage électrique 20. Ce logement de réception est ouvert à l'avant pour permettre l'accès au mécanisme d'appareillage électrique 20 rapporté dans ledit logement.

Comme le montrent les figures 1 à 4, le corps 15 est en pratique réalisé en deux parties distinctes : une partie arrière 12 appelée dans la suite du texte « platine-support 12 » et une partie avant 17 appelée par la suite « cadre 17 ». La platine-support 12 est prévue pour être fixée à la cloison ou paroi murale et supporter le mécanisme d'appareillage électrique 20, tandis que le cadre 17 a une fonction de protection de ce mécanisme d'appareillage électrique 20 et de support de moyens d'interface (en particulier l'enjoliveur 30) permettant à l'utilisateur d'interagir avec le mécanisme d'appareillage électrique 20.

La platine-support 12 est ici réalisée d'une seule pièce en matière plastique moulée, tandis que le cadre 17 est réalisé par clipsage de deux pièces pour simplifier la réalisation du cadre 17 par moulage.

L'enjoliveur 30 présente une forme associée au mécanisme d'appareillage électrique 20. Ici, cet enjoliveur 30 comprend, à l'intérieur d'une partie structurelle en forme de cadre, un puits d'insertion d'une fiche électrique. Cet enjoliveur 30 porte en outre un capot rabattable de protection 35 du puits d'insertion 32 (figure 2).

Comme cela est représenté sur les figures 2 à 5, la platine-support 12 comprend la paroi de fond 11 bordée par une paroi latérale 13 qui s'élève à partir de la paroi de fond 11, sensiblement perpendiculairement à cette dernière. La paroi latérale 13 de la platine-support 12 suit un contour globalement rectangulaire, en particulier carré, avec des panneaux droits 13A, 13B reliés par des portions en angle formant des coins à angles coupés.

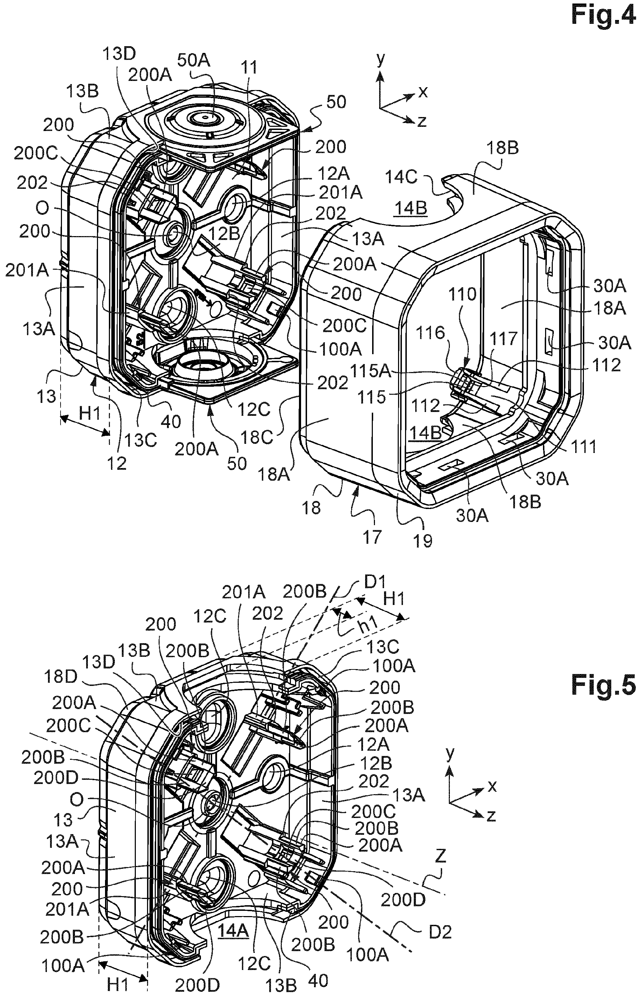

La paroi de fond 11 de la platine-support 12 est pourvue de moyens de fixation à un support de réception, ici la cloison ou paroi murale (non représentée). Pour cela, la paroi de fond 11 de la platine-support 12 présente des orifices circulaires 12A ici fermés par des opercules d'étanchéité perçables (figures 4 et 5). Ces orifices circulaires 12A peuvent être traversés par des vis (non représentées) afin de fixer la platine-support 12 sur la cloison ou paroi murale.

Comme le montrent les figures 2, 4 et 5, la paroi de fond 11 de la platine-support 12 présente également des orifices 12C de forme oblongue. Il est plus particulièrement prévu deux orifices 12C de forme oblongue, s'étendant selon des axes principaux perpendiculaires. Ces orifices 12C de forme oblongue peuvent également être traversés par des vis (non représentées) afin de fixer la platine-support 12 sur la cloison murale. La forme oblongue de ces orifices 12C permet d'ajuster l'orientation de montage de la platine-support 12 sur la cloison ou paroi murale.

La paroi de fond 11 de la platine-support 12 comprend également une ouverture centrale 12B, fermée ici par un opercule d'étanchéité déchirable pour le passage par exemple d'un câble électrique (U1000RO2V ou HO7RNF), d'une gaine électrique de type ICTA ou d'un tube IRL.

Comme le montrent les figures 4 et 5, la paroi latérale 13 de la platine-support 12 présente, sur deux panneaux droits 13A opposés, une hauteur maximale H1 déterminée et uniforme.

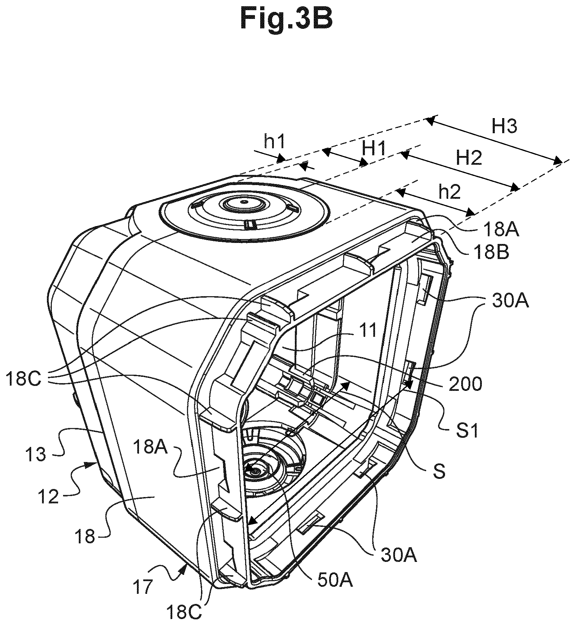

Sur les deux autres panneaux droits 13B opposés de la paroi latérale 13 de la platine-support 12, la hauteur de cette paroi latérale 13 diminue localement, depuis la hauteur maximale H1, jusqu'à une hauteur minimale h1 (figure 5). Cette hauteur minimale h1 est par exemple inférieure ou égale à 10% de la hauteur totale maximale H3 de la paroi latérale 16 du corps 15 (figures 3B et 5).

Cette diminution locale de la hauteur, depuis la hauteur maximale H1 vers la hauteur minimale h1, forme une encoche dans la paroi latérale 13 de la platine-support 12 qui délimite une première partie 14A d'ouverture d'entrée à l'intérieur du corps 15 de la boîte électrique 10 dans chaque panneau droit 13B correspondant de la paroi latérale 13 de la platine-support 12. Ici, deux premières parties 14A d'ouvertures d'entrée sont donc formées sur les panneaux droits 13B opposés correspondants de la paroi latérale 13 de la platine-support 12.

Comme le montrent également les figures 2, 4 et 5, un bord avant 13C de la paroi latérale 13 de la platine-support 12 présente une forme particulière qui délimite une gorge 13D ouverte vers l'avant (figures 4 et 5). Cette gorge 13D s'étend le long du bord avant 13C de cette paroi latérale 13, y compris le long des premières parties 14A d'ouvertures formées dans les panneaux droits 13B opposés de la paroi latérale 13 de la platine-support 12.

En dehors de la partie qui longe chaque première partie 14A d'ouverture d'entrée, il est prévu dans la gorge 13D, un joint d'étanchéité 40 (figures 2 - 5) positionné entre le bord avant 13C de la paroi latérale 13 de la platine-support 12 et un bord arrière 18C d'une paroi latérale 18 du cadre 17.

Le joint d'étanchéité 40 est déformé par l'emboîtement desdites parties avant et arrière l'une dans l'autre. Il assure alors un assemblage étanche entre la platine-support 12 et le cadre 17.

Le joint d'étanchéité 40 s'étend ici tout autour de la boîte électrique 10, en dehors de chaque première partie 14A d'ouverture d'entrée.

Comme le montrent les figures 2 et 4, la partie de la gorge 13D s'étendant le long de chaque première partie 14A d'ouverture d'entrée est destinée à recevoir, par coulissement, un embout 50 ; 60 ; 70 passe-câble (figures 2 et 6 à 18).

Ici, selon le mode de réalisation de la boîte électrique 10 des figures 1 à 5, deux embouts 50 passe-câble sont montés sur la platine-support 12, dans les deux premières parties 14A d'ouverture d'entrée formées sur les panneaux droits 13B opposés correspondants de la paroi latérale 13 de la platine-support 12.

Chaque embout 50 passe-câble constitue ici une pièce distincte de la boîte électrique 10. Il est donc amovible en ce sens qu'il peut être retiré de la boîte électrique 10.

L'invention porte ici plus particulièrement sur cet embout 50 ; 60 ; 70 passe-câble.

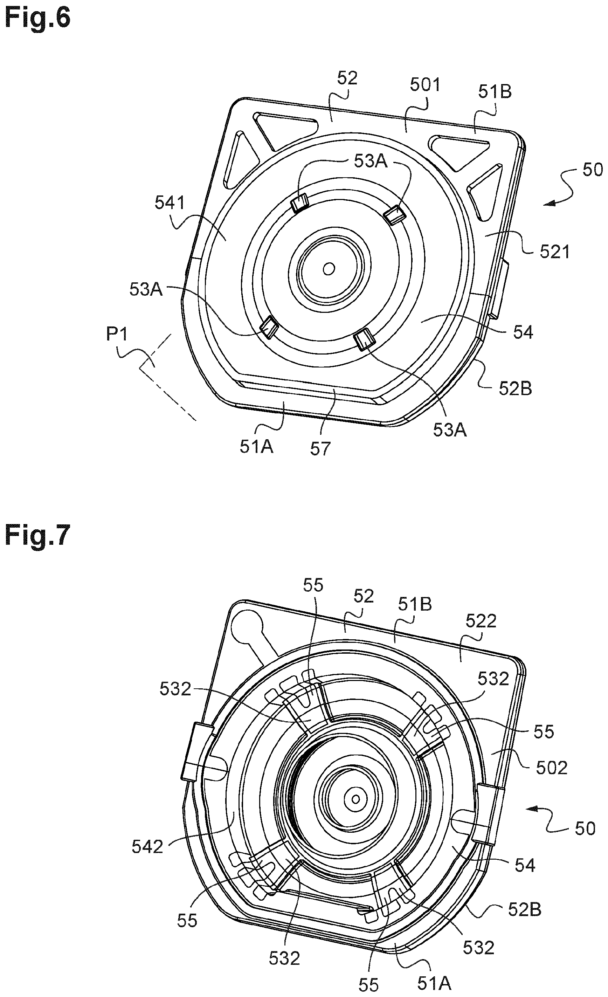

Comme le montrent les figures 2, 8, 9, 17 et 18, chaque embout 50 ; 60 ; 70 comporte une plaquette support 52 ; 62 ; 72 délimitée entre un bord périphérique intérieur 52A ; 62A ; 72A et un bord périphérique extérieur 52B ; 62B ; 72B (figures 6 à 9 et 17, 18).

Cette plaquette support 52 ; 62 ; 72 présente ici une forme plate, globalement carrée, avec deux coins adjacents arrondis. En variante, la plaquette support 52, 62, 72 peut présenter toute forme adaptée, notamment rectangulaire ou circulaire. Elle comporte une face externe 521 ; 621 ; 721 et une face interne 522 ; 622 ; 722 sensiblement planes.

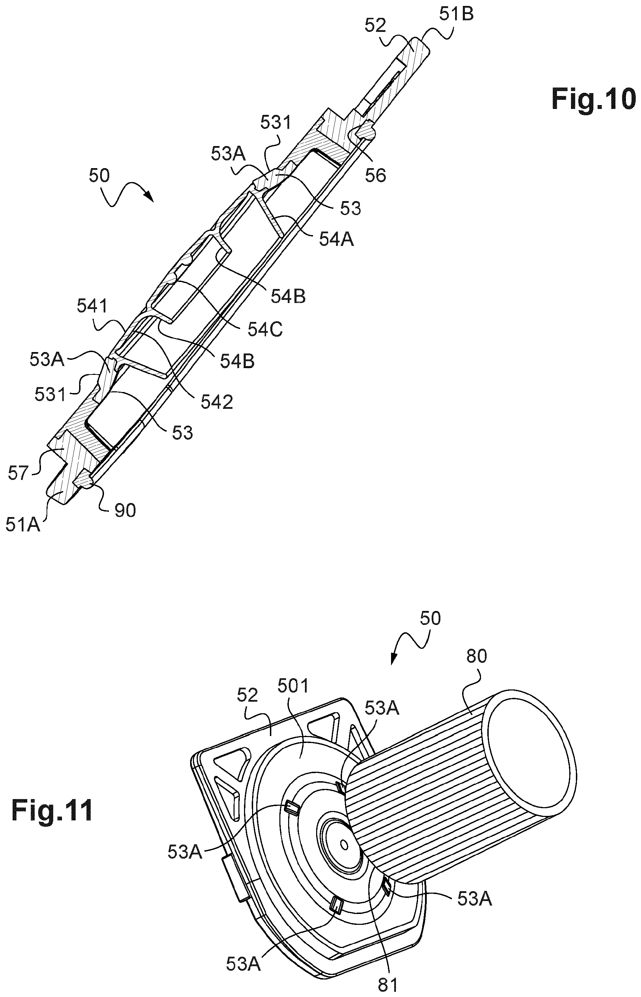

Le bord périphérique intérieur 52A ; 62A ; 72A délimite intérieurement une ouverture 50A ; 60A ; 70A pour le passage d'un câble électrique 80 (figures 11 à 16) ou d'une gaine électrique de type ICTA ou d'un tube IRL qui achemine un tel câble électrique.

L'ouverture 50A ; 60A ; 70A présente ici un contour de forme globalement circulaire, avec une partie droite située entre les deux coins arrondis de la plaquette support (figures 8, 9 et 17, 8).

En conséquence, le bord périphérique intérieur 52A ; 62A ; 72A de la plaquette support 52 ; 62 ; 72 présente une forme circulaire avec une partie droite, tandis que le bord périphérique extérieur 52B ; 62B ; 72B présente une forme carrée avec deux coins adjacents arrondis.

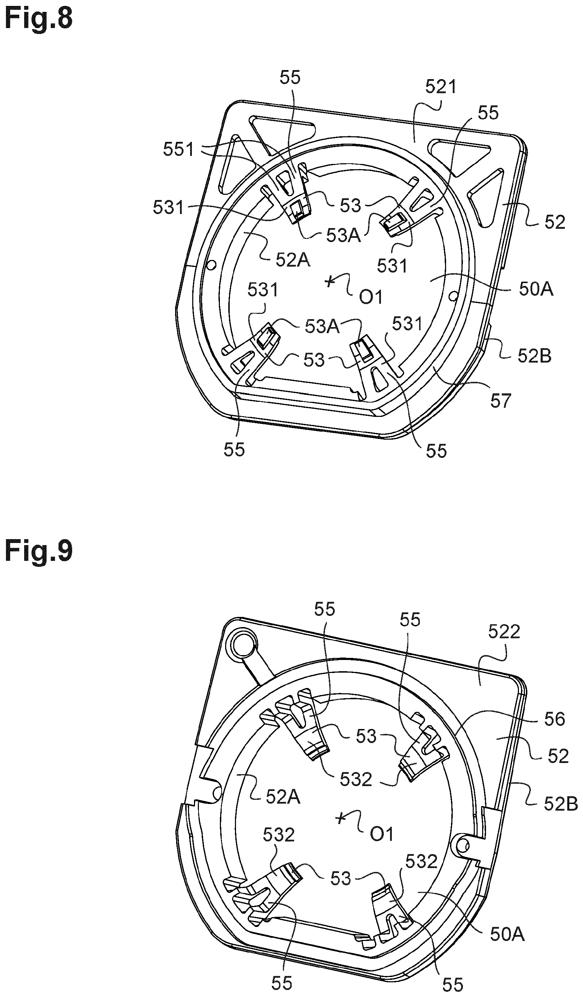

La face externe 521 ; 621 ; 721 de la plaquette support 52 ; 62 ; 72 est sensiblement plane à l'exception d'un muret 57 qui s'élève vers l'extérieur et entoure l'ouverture 50A ; 60A ; 70A (figures 6 et 8). Ce muret 57 délimite la zone externe de la plaquette support 52 ; 62 ; 72 recouverte par la membrane 54.

L'embout 50 passe-câble comprend ici des moyens de montage sur la boîte électrique correspondante. Il s'agit ici de moyens de montage par coulissement et emboîtement, comme décrit ci-dessous. Ces moyens de montage de l'embout 50 correspondent ici au bord périphérique de l'embout 50, qui présente une forme particulière adaptée à coopérer avec des moyens complémentaires de réception de la boîte électrique 10 comprenant la gorge 13D de ladite première partie 14A d'ouverture d'entrée formée dans le panneau droit 13B correspondant de la paroi latérale 13 de la platine-support 12 décrite précédemment.

Une première partie 51A ; 61A ; 71A de la plaquette support 52 ; 62 ; 72 de chaque embout 50 ; 60 ; 70 est coulissée dans la gorge 13D de ladite première partie 14A d'ouverture d'entrée formée dans le panneau droit 13B correspondant de la paroi latérale 13 de la platine-support 12.

Cette première partie 51A ; 61A, 71A de la plaquette support 52 ; 62 ; 72 comprend ici une partie arrière du bord périphérique extérieur 52B ; 62B ; 72B de la plaquette support 52 ; 62 ; 72 (figures 6, 7, 17, 18). Elle présente une forme complémentaire de celle de la gorge 13D et est adaptée à être coulissée dans la gorge 13D pour être emboitée dans celle-ci.

Comme cela sera décrit plus loin, une deuxième partie 51B ; 61B ; 71B de la plaquette support 52 ; 62 ; 72 de chaque embout 50 ; 60 ; 70 passe-câble comprenant une partie avant du bord périphérique extérieur 52B ; 62B ; 72B de la plaquette support 52 ; 62 ; 72 (figures 6, 7, 17, 18) est coulissée dans une gorge 14C similaire d'une deuxième partie 14B d'ouverture d'entrée formée dans la paroi latérale 18 du cadre 17. Cette gorge 14C fait partie desdits moyens complémentaires de réception de l'embout 50.

Elle présente une forme complémentaire de celle de la gorge 14C et est adaptée à être coulissée dans la gorge 14C pour être emboitée dans celle-ci.

Chaque embout 50 ; 60 ; 70 comprend également une membrane 54 d'étanchéité (non représentée sur les figures 8, 9, 17 et 18)) souple et perforable, surmoulée au moins partiellement sur la plaquette support 52 ; 62 ; 72, qui obture ladite ouverture 50A ; 60A; 70A et qui est adaptée à être traversée par le câble électrique 80, la gaine électrique de type ICTA ou le tube IRL.

Il s'agit par exemple d'une membrane en matériau élastomère. Cette membrane 54 est souple et déformable : elle est adaptée à se déformer sous l'action du câble électrique ou du tube ou de la gaine appliqué contre elle, s'étirer et se déchirer de manière à laisser passer le câble électrique ou tube.

Comme représenté plus particulièrement sur les figures 8, 9, 17 et 18, l'embout 50 ; 60 ; 70 selon l'invention comporte au moins un élément rigide 53 ; 63 ; 73 s'étendant dans une zone de ladite ouverture 50A ; 60A; 70A comprise entre ledit bord périphérique interne 52A ; 62A ; 72A de la plaquette support 52 ; 62 ; 72 et le centre O1 ; O2 ; O3 de ladite ouverture 50A ; 60A; 70A.

En pratique, chaque élément rigide 53 ; 63 ; 73 laisse ici libre une zone centrale de la membrane 54.

Cet élément rigide 53 ; 63 ; 73 est par exemple réalisé dans un matériau plastique dur, différent du matériau plastique souple constituant la membrane 54. Cet élément rigide 53 ; 63 ; 73 est non déformable : il ne se déforme pas sous l'action du câble électrique 80 ou du tube ou de la gaine appliqué contre lui, mais il est déplacé par celui-ci. En particulier, l'élément rigide 53 ; 63 ; 73 est plus rigide et moins déformable que la membrane 54.

Ledit élément rigide 53 ; 63 ; 73 se présente ici sous la forme d'un élément sensiblement plat comprenant deux faces principales 531, 532 ; 631, 632 ; 731, 732 externe et interne opposées.

Dans les modes de réalisation représenté sur les figures annexées, chaque élément rigide 53 ; 63 ; 73 est rattaché directement au bord périphérique interne 52A ; 62A ; 72A de la plaquette support 52 ; 62 ; 72. Chaque élément rigide 53 ; 63 ; 73 est ici relié au bord périphérique interne de ladite plaquette support par un élément de charnière 55 ; 65 ; 75 de l'embout 50 ; 60 ; 70. Cet élément de charnière 55 ; 65 ; 75 autorise notamment un mouvement de l'élément rigide 52 ; 62 ; 72 correspondant en dehors du plan de l'ouverture 50A ; 60A ; 70A, c'est-à-dire un mouvement selon une direction inclinée par rapport au plan moyen de la plaquette support 72 ; 62 ; 72. Ce mouvement hors plan comprend notamment une composante selon une direction orthogonale au plan moyen de la plaquette support 52 ; 62 ; 72.

Ainsi, chaque élément rigide 53 ; 63 ; 73 est mobile par rapport au bord périphérique interne 52A ; 62A ; 72A de la plaque support 52 ; 62 ; 72, au moins entre une position dans laquelle il s'étend dans le plan de l'ouverture 50A ; 60A ; 70A de la plaquette support 52 ; 62 ; 72 et une position dans laquelle il s'étend au moins partiellement en dehors du plan de cette ouverture. Tous les éléments rigides sont mobiles entre une position dans laquelle ils s'étendent tous dans le plan de l'ouverture 50A ; 60A; 70A de la plaquette support 52 ; 62 ; 72 et une position dans laquelle ils s'étendent tous au moins partiellement en dehors du plan de cette ouverture, d'un même côté de la plaque support.

En pratique, lorsque l'embout 50 : 60 ; 70 est en place sur la boîte électrique, chaque élément rigide 53 ; 63 ; 73 est ainsi mobile entre une position dans laquelle il s'étend dans le plan de l'ouverture 50A ; 60A ; 70A de la plaquette support 52 ; 62 ; 72 et une position dans laquelle il s'étend au moins partiellement à l'arrière de cette plaquette support 52 ; 62 ; 72, vers l'intérieur de la boîte électrique 10.

Ainsi, l'élément rigide 53 ; 63 ; 73 est déplacé lors de la déformation de la membrane par l'introduction du câble électrique 80 de la gaine ou du tube tout en restant partiellement noyé dans la membrane 54. Il reste en outre ici rattaché directement au bord périphérique interne 52A ; 62A ; 72A de la plaquette support 52 ; 62 ; 72 pendant l'insertion du câble électrique de la gaine ou du tube.

Ici, avantageusement, chaque élément rigide 53 ; 63 ; 73 vient de formation avec la plaquette support 52 ; 62 ; 72, par exemple par moulage.

Plus précisément, dans le premier mode de réalisation de l'embout 50, représenté plus particulièrement sur les figures 6 à 9, il est prévu une pluralité d'éléments rigides 53, répartis autour du centre O1 de l'ouverture 50A de la plaquette support 52.

Il est prévu ici quatre éléments rigides 53. Chaque élément rigide 53 comprend une languette s'étendant radialement dans l'ouverture 50A de la plaquette support 52, à partir du bord périphérique interne 52A de la plaquette support 52. Les éléments rigides 53 sont ici diamétralement opposés deux à deux, et s'étendent selon les diagonales de la plaquette support 52.

En variante, il peut être prévu deux, trois ou un nombre supérieur à quatre d'éléments rigides. Il est prévu de préférence au moins deux éléments rigides diamétralement opposés. Les éléments rigides sont de préférence répartis régulièrement autour du centre O1 de l'ouverture 50A de la plaquette support 52.

Les éléments rigides 53 sont ici séparés les uns des autres par des espaces comblés par la membrane 54.

Chaque élément rigide 53 présente ici une forme globalement triangulaire, qui s'affine depuis le bord périphérique interne 52A de la plaquette support 52 vers le centre O1 de celle-ci.

Chaque élément rigide 53 est relié au bord périphérique interne 52A de la plaquette support 52 par ledit élément de charnière 55.

Ici, l'élément de charnière 55 comprend deux jambes 551 qui prolonge l'élément rigide 53 à son extrémité radiale située à proximité du bord périphérique interne 52A de la plaquette support 52.

En variante, l'élément de charnière pourrait par exemple comprendre un amincissement de l'élément rigide, procurant la flexibilité nécessaire audit déplacement de l'élément rigide vers l'intérieur de la boîte électrique.

Grâce à cet élément de charnière 55, l'élément rigide 53 est adapté à être déplacé vers l'intérieur de la boîte électrique 10, de manière à permettre le passage de câbles électriques, gaines ou tubes de différents diamètres.

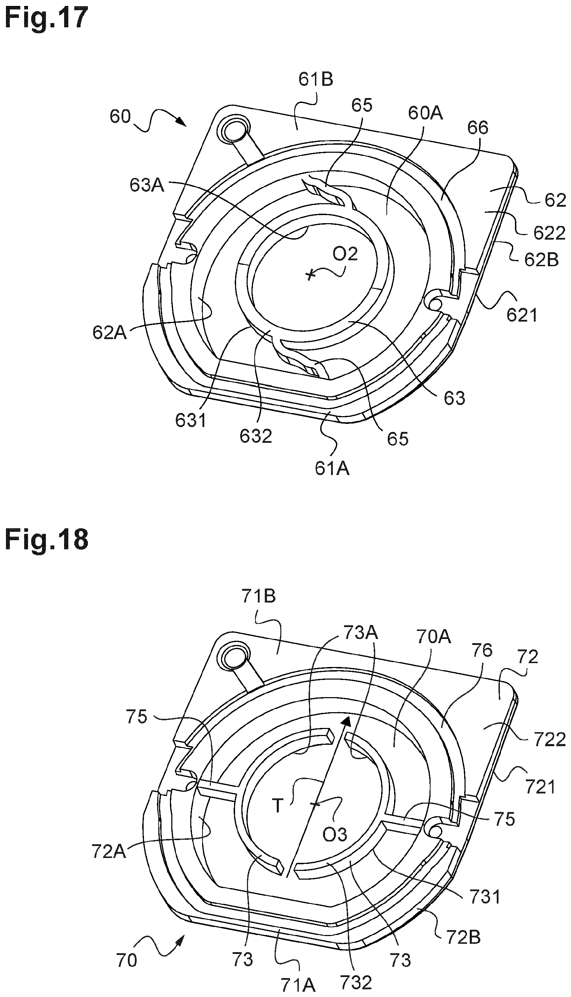

Dans le deuxième mode de réalisation représenté sur la figure 17, il est par exemple prévu un unique élément rigide 63, de forme circulaire, qui s'étend autour du centre O2 de l'ouverture 60A de la plaquette support 62. L'élément rigide 63 présente ainsi ici la forme d'un anneau continu.

Cet élément rigide 63 est relié au bord périphérique interne 62A de la plaquette support 62 par deux liens 65 courbés et flexibles.

Ces deux liens 65 autorisent à la fois un mouvement de l'élément rigide 63 en dehors du plan moyen de la plaquette support 62, selon une direction inclinée par rapport au plan moyen de la plaquette support 62, mais aussi un mouvement de l'élément rigide 63 dans le plan moyen de la plaquette support 62.

La flexibilité des liens 65 est due à leur forme allongée et leur faible épaisseur dans deux directions.

Dans le troisième mode de réalisation représenté sur la figure 18, il est prévu deux éléments rigides 73, en forme d'arc de cercle, qui s'étendent autour du centre O3 de l'ouverture 70A de la plaquette support 72.

Chacun de ces éléments rigides 73 est relié au bord périphérique interne 72A de la plaquette support 72 par un lien 75 droit et flexible.

Ces deux liens 75 autorisent à la fois un mouvement de chaque élément rigide 73 en dehors du plan moyen de la plaquette support 72, selon une direction inclinée par rapport au plan moyen de la plaquette support 72, mais aussi un mouvement de chaque élément rigide 73 dans le plan moyen de la plaquette support 72.

La flexibilité des liens 75 est due à leur forme allongée et leur faible épaisseur dans deux directions.

En variante, chaque élément rigide peut s'étendre à distance du bord périphérique interne de la plaquette support, sans être en contact avec celui-ci. L'élément rigide est alors maintenu uniquement par la membrane souple. Il est alors mobile car entrainé par la déformation de cette membrane.

La membrane 54 est ici surmoulée à la fois sur la plaquette-support 52 ; 62 ; 72 et sur chaque élément rigide 53 ; 63 ; 73 (figure 10). Chaque élément rigide est donc au moins partiellement noyé dans la membrane 54.

Elle obture ainsi tous les espaces laissés libres par le ou les éléments rigides dans l'ouverture 50A ; 60A ; 70A. La membrane 54 présente une face externe 541 sensiblement plane (figure 10) et une face interne 542. La face interne 542 présente ici une géométrie complexe qui sera décrite ultérieurement. Ici, la face interne 542 ne recouvre pas totalement les éléments rigides 53, 63, 73, qui présentent donc également une partie de leur face interne non recouverte par la membrane 54. En variante, la membrane peut recouvrir entièrement la face interne de chaque élément rigide.

Quel que soit le mode de réalisation considéré, l'embout 50 ; 60 ; 70 présente une face d'entrée 501 pour l'introduction du câble électrique 80 dans la boîte électrique 10 pour appareillage électrique et une face opposée 502 (figures 6, 7). Cette face d'entrée 501 comprend la face externe 521 ; 621 ; 721 de la plaquette support 52 ; 62 ; 72 et la face externe 541 de la membrane 54 (figures 6, 7, 17 et 18).

De manière remarquable, chaque élément rigide 53 ; 63 ; 73 présente une partie 53A ; 63A ; 73A non recouverte par ladite membrane 54 de manière à être directement accessible audit câble électrique 80 du côté de la face d'entrée 501 de l'embout 50 ; 60 ; 70.

Cette partie 53A ; 63A ; 73A de l'élément rigide 53 ; 63 ; 73 comprend au moins une partie de la face principale externe 531 ; 631 ; 731 de l'élément rigide 53 ; 63 ; 73 qui est donc non recouverte par la membrane 54.

Dans le premier mode de réalisation, ladite partie 53A de l'élément rigide 53 appartient à un relief qui s'élève à l'extrémité radiale de l'élément rigide 53 la plus proche du centre de l'ouverture 50A.

Dans les deuxième et troisième modes de réalisation, ladite partie 63A ; 73A de l'élément rigide 63 ; 73 est constituée par la face principale externe 631 ; 731 de l'élément rigide 63 ; 73.Ainsi, lorsque le câble électrique 80 ou la gaine ou le tube accueillant le câble électrique est appuyé contre la face d'entrée 501 de l'embout 50 ; 60 ; 70, il prend appui sur ladite partie 53A ; 63A ; 73A de chaque élément rigide 53 ; 63 ; 73 et glisse sur celui-ci.

L'introduction du câble électrique 80 ou du tube est ainsi facilitée.

La membrane 54 se déforme de façon régulière autour de chaque élément rigide 53 ; 63 ; 73 car chaque partie de la membrane 54 qui se déforme est maintenue par le ou les éléments rigides 53 ; 63 ; 73. En outre, le contact entre le câble électrique 80, la gaine ou le tube et la membrane 54 est limité puisque le câble électrique, la gaine ou le tube est au moins partiellement en contact avec les éléments rigide 53 ; 63 ; 73. Une partie d'une extrémité longitudinale 81 du câble électrique 80, de la gaine ou du tube n'est ainsi pas directement en contact avec la membrane 54. Cela limite les frottements entre le câble électrique 80, la gaine ou le tube et la membrane 54, qui peuvent endommager la membrane 54. En outre, cela permet une répartition plus homogène de la pression exercée par l'extrémité longitudinale 81 du câble électrique 80 de la gaine ou du tube sur la membrane 54.

A cet effet, de préférence, la partie 53A ; 63A ; 73A non recouverte de l'élément rigide 53 ; 63 ; 73 est disposée radialement dans la zone de l'ouverture 50A ; 60A ; 70A dans laquelle le contact entre câble électrique, la gaine ou le tube et l'embout 50 ; 60 ; 70 est attendu Ainsi, ladite partie 53A ; 63A ; 73A non recouverte de l'élément rigide 53 ; 63 ; 73 est positionnée dans la zone de ladite ouverture 50A ; 60A; 70A comprise entre ledit bord périphérique interne 52A ; 62A ; 72A de la plaquette support 52 ; 62 ; 72 et le centre O1 ; O2 ; O3 de ladite ouverture 50A ; 60A ; 70A, au niveau de la zone d'appui du câble électrique 80, de la gaine ou du tube. En d'autres termes, la partie 53A ; 63A ; 73A non recouverte de l'élément rigide 53 ; 63 ; 73 est disposée à une distance du centre de l'ouverture 50A ; 60A ; 70A correspondant sensiblement à un rayon de câbles électrique, de gaine ou de tube.

De préférence, la partie 53A ; 63A ; 73A non recouverte de l'élément rigide 53 ; 63 ; 73 s'étend radialement sur une longueur comprise entre 1,5 et 10 millimètres . Elle est ainsi adaptée à interagir avec des câbles électriques, gaines ou tubes de différents rayons.

La partie 53A ; 63A ; 73A non recouverte de l'élément rigide 53 ; 63 ; 73 forme ainsi une zone d'appui mobile de l'embout 50 pour le câble électrique 80, la gaine ou le tube à introduire à travers la membrane 54 : le câble électrique 80, la gaine ou le tube prend appui sur la partie 53A ; 63A ; 73A non recouverte de l'élément rigide 53 ; 63 ; 73 et celui-ci se déplace de manière à laisser passer le câble électrique, la gaine ou le tube, tout en maintenant le contact entre ce câble électrique, cette gaine ou ce tube et la partie non recouverte de cet élément rigide 53 ; 63 ; 73. En pratique, l'élément rigide 53 ; 63 ; 73 avec sa partie non recouverte se déplace vers l'intérieur de la boîte électrique, et de manière à s'écarter radialement pour permettre le passage du câble électrique, de la gaine ou du tube.

La membrane 54 se déchire ainsi selon un contour mieux maîtrisé que dans un embout de l'état de la technique ne comportant pas d'élément rigide accessible sur la face d'entrée de l'embout.

Afin de renforcer la maîtrise du déchirement de la membrane 54, celle-ci présente, sur sa face interne tournée vers l'intérieur de la boîte électrique 10, une pluralité de lèvres 54A, 54B ou reliefs 54C circulaires (figure 10).

Une lèvre 54A circulaire s'élève notamment au niveau des extrémités radiales des éléments rigides 53 situés à proximité du centre de l'ouverture 50A (figure 10).

De manière générale, l'élément rigide 53 ; 63 ; 73 est au surplus réalisé dans un matériau dur présentant un coefficient de frottement avec les matériaux pouvant constituer le câble électrique, la gaine ou le tube l'entourant inférieur au coefficient de frottement du matériau de la membrane avec les matériaux pouvant constituer le câble électrique, la gaine ou le tube l'entourant.

Le fait que les éléments rigides 53 ; 63 ; 73 soient moins déformables que la membrane 54 implique également cette limitation des frottements.

L'insertion du câble électrique, de la gaine ou du tube est ainsi facilitée.

Ici, la partie de la face principale externe 531 ; 631 ; 731 dudit élément rigide 53 ; 63 ; 73 correspondant à la partie 53A ; 63A ; 73A non recouverte de l'élément rigide s'étend dans le prolongement de la face externe 541 de la membrane 54 (figure 10).

En variante, ladite face principale externe dudit élément rigide fait partiellement saillie vers l'extérieur de la face externe de la membrane au niveau de la partie 53A ; 63A ; 73A non recouverte de l'élément rigide. Ainsi, tout contact entre le câble électrique, la gaine ou le tube et la membrane 54 de l'embout 50 est initialement évité.

Pour permettre le montage du mécanisme d'appareillage électrique 20 dans la boîte électrique 10, la paroi de fond 11 de la platine-support 12 porte des montants 200 (figures 2, 3A, 4 et 5). Ces montants 200 s'étendent vers l'avant à partir de la paroi de fond 11. Ils s'étendent perpendiculairement à celle-ci.

Les montants 200 sont formés d'une seule pièce, en matière plastique moulée, avec la platine-support 12.

Comme le montrent les figures 2, 4 et 5, il est ici prévu quatre montants 200 disposés, par paire, de manière symétrique par rapport à un centre O de la paroi de fond 11 de la platine-support 12.

Le centre O de la paroi de fond 11 de la platine-support 12 est donc un centre de symétrie pour le positionnement des montants 200. Cette symétrie centrale dans le positionnement des montants 200 de la platine-support 12 permet d'autoriser le montage du mécanisme d'appareillage électrique 20 dans la boîte électrique 10 dans différentes positions décalées l'une par rapport à l'autre par rotation autour d'un axe Z (figure 5) orthogonal à la paroi de fond 11 de la platine-support 12 et passant par le centre O de cette paroi de fond 11.

Ici, les montants 200 de la platine-support 12 sont disposés dans des zones situées en regard des portions en angle formant les coins de la paroi latérale 13 de la platine-support 12, de manière orthogonale aux diagonales D1, D2 de la paroi de fond 11 (figure 5).

Comme cela est représenté sur les figures 4 et 5, chaque montant 200 présente ici une partie avant 200A et une partie arrière 201A.

Chaque partie arrière 201A est attachée à la paroi de fond 11 de la platine-support 12. Elle présente globalement un contour rectangulaire avec une forme légèrement incurvée convexe vers l'extérieur. Les bords latéraux de chaque partie arrière 201A forment des nervures.

Comme le montrent les figures 2, 4 et 5, la partie avant 200A de chaque montant 200 s'étend vers l'avant à partir de la partie arrière 201A.

La partie avant 200A présente une forme de U renversé définie par deux branches latérales 200B et une branche 200D parallèle à la paroi de fond 11 de la platine-support 12 et joignant les deux branches latérales 200B à leur extrémité éloignée de la partie arrière 201A (cette branche 200D correspond à la base du U renversé). Les branches latérales 200B forment également des nervures. Les nervures des branches latérales 200B permettent ici le coulissement des moyens de montage 21 du socle du mécanisme d'appareillage électrique 20 lors du montage de ce dernier dans la boîte électrique 10.

L'ensemble des branches latérales 200B, de la branche 200D et de la partie supérieure de la partie arrière 201A délimite une fenêtre 200C dans chaque montant 200.

Comme le montrent également les figures 4 et 5, la partie avant 200A présente une épaisseur plus faible que la partie arrière 201A, formant alors un décroché 202. Ce décroché 202 permet la formation d'un rebord de butée 202 qui s'étend entre les parties avant 200A et arrière 201A de chaque montant 200. Ce rebord de butée 202 formé permet alors, lors du montage du mécanisme d'appareillage électrique 20 dans la boîte électrique, de positionner le socle du mécanisme d'appareillage électrique 20 dans la boîte électrique 10 à une distance déterminée de la paroi de fond 11 de la platine-support 12 de manière à laisser un espace libre pour placer aisément les fils de raccordement électrique.

L'agencement des nervures des branches latérales 200B et de la fenêtre 200C de la partie avant 200A de chaque montant 200, combiné avec le rebord de butée 202 formé à la jonction des parties avant et arrière 200A, 201A de chaque montant 200, constitue un moyen de montage par encliquetage du socle du mécanisme d'appareillage 20.

Comme le montre plus particulièrement la figure 2, le socle du mécanisme d'appareillage 20 comporte à ses quatre coins, quatre moyens d'encliquetage 21 identiques adaptés à coopérer avec les moyens de montage par encliquetage, décrits précédemment, des quatre montants 200. Chaque moyen d'encliquetage 21 comprend, pour l'essentiel, une partie qui coulisse sur les nervures des branches latérales 200B et une dent en saillie qui s'accroche dans la fenêtre 200C. Chaque moyen d'encliquetage 21, lorsqu'il est encliqueté, prend alors appui sur le rebord de butée 202 correspondant.

Ici, la hauteur maximale H1 de la paroi latérale 13 de la platine-support 12 est inférieure ou égale à 50% de la hauteur totale maximale H3 de la paroi latérale 16 du corps 15. De préférence, cette hauteur maximale H1 de la paroi latérale 13 de la platine-support 12 est inférieure ou égale à 40% de la hauteur totale maximale H3 de la paroi latérale 16 du corps 15. Ainsi, comme la hauteur de la paroi latérale 13 de la platine-support 12 est plus faible, l'accès à l'intérieur de la platine-support 12, par exemple pour un installateur lors du raccordement électrique, est facilité.

Plus généralement, de manière avantageuse, la hauteur maximale H1 de la paroi latérale 13 de la platine-support 12 est déterminée de manière à ce qu'une partie du bord avant 13C de la paroi latérale 13 de la platine-support 12, qui longe le bord arrière 18C de la paroi latérale 18 du cadre 17, est située à une hauteur déterminée, ici la hauteur maximale H1, par rapport à la paroi de fond 11, en retrait d'une distance minimum par rapport aux ouvertures d'accès (non représentées) à des bornes de connexion électrique du mécanisme d'appareillage électrique 20 rapporté sur les montants 200 de ladite platine-support 12. Par retrait, on entend ici un retrait en hauteur, c'est-à-dire que la hauteur de la paroi latérale 13 de la platine-support 12 est en partie inférieure à la hauteur à laquelle sont positionnées les ouvertures d'accès (non représentées) aux bornes de connexion électrique du mécanisme d'appareillage électrique 20.

Par ailleurs, comme le montrent les figures 2 et 4, le cadre 17 comprend la paroi latérale 18 qui se présente sous la forme d'un manchon. Cette paroi latérale 18 du cadre 17 est prévue pour être rapportée sur la paroi latérale 13 de la platine-support 12 pour s'étendre dans le prolongement de celle-ci de manière à former la paroi latérale 16 du corps 15. La paroi latérale 18 du cadre 17 suit un contour globalement rectangulaire, en particulier carré, avec des panneaux droits 18A, 18B reliés par des portions en angle formant des coins à angles coupés, en correspondance avec le contour de la paroi latérale 13 de la platine-support 12.

Comme le montre la figure 3B, à l'avant, la paroi latérale 18 du cadre 17 décroche de manière à former un trottoir 18A, s'étendant perpendiculairement à la majeure partie de la paroi latérale 18 du cadre 17.

La partie avant 18B de la paroi latérale 18 du cadre 17 s'étend de manière concentrique à la majeure partie de la paroi latérale 18 du cadre 17. Cette partie avant 18B délimite une section réduite S1 de l'ouverture centrale (figure 3B). Le décroché de la paroi latérale 18 du cadre 17 permet alors de réduire à l'avant la section S de cette ouverture centrale.

Le décroché de la paroi latérale 18 de cadre 17 est conformé pour recevoir une rehausse 19 en forme de cadre de plus faible hauteur H4 (figures 1, 2, 3A et 4). Cette rehausse 19 est fixée sur le cadre 17 par clipsage. Pour cela, la rehausse 19 comporte quatre clips disposés aux quatre coins de cette rehausse 19, qui viennent se loger dans des logements de forme correspondante prévus aux quatre coins du cadre 17. En outre, comme le montre la figure 3B, la partie avant 18B de la paroi latérale 18 du cadre 17 comprend, le long de son pourtour, des nervures 18C de centrage de la rehausse 19. La rehausse 19 est donc destinée à être rapportée sur ces nervures 18C sur une partie extérieure de la partie avant 18B de la paroi latérale 18 du cadre 17 et fixée par clipsage au cadre 17.

Ainsi, le cadre 17 est réalisé par l'association par clipsage du manchon formé par la paroi latérale 18 et de la rehausse 19. L'utilisation de deux sous-parties pour la réalisation du cadre 17 permet d'en simplifier la conception par moulage. La rehausse 19 a un rôle esthétique et est conçue pour occulter la partie avant du cadre 17.

En variante, le cadre pourrait être réalisé d'une seule pièce, par exemple en matière plastique moulée.

Comme le montrent les figures 1, 2, 3A et 4, le cadre 17 est conçu, sur le décroché formé par la partie avant de la paroi latérale 18 du cadre 17, pour recevoir l'enjoliveur 30. Pour cela, le cadre 17 comprend, sur la partie avant 18B de la paroi latérale 18 du cadre 17, des orifices 30A de fixation de l'enjoliveur 30. Ces orifices 30A sont adaptés à recevoir des éléments permettant le montage de l'enjoliveur 30 sur le cadre 17. Ces éléments (non visibles) de montage sont par exemple des éléments quart-de-tour, manœuvrables depuis la face avant de l'enjoliveur 30.

De manière similaire à la paroi latérale 13 de la platine-support 12, comme le montrent les figures 2 et 4, la paroi latérale 18 du cadre 17 présente, sur deux panneaux droits 18A opposés s'étendant dans le prolongement des panneaux droits 13A opposés de la paroi latérale 13 de la platine-support 12, une hauteur maximale H2 déterminée et uniforme (figure 3B).

Sur les deux autres panneaux droits 18B opposés, s'étendant eux dans le prolongement des panneaux droits 13B opposés de la paroi latérale 13 de la platine-support 12, la hauteur de cette paroi latérale 18 diminue localement, depuis la hauteur maximale H2, jusqu'à une hauteur minimale h2 (figure 3B). Cette hauteur minimale h2 est par exemple inférieure ou égale à 20% de la hauteur totale maximale H3 de la paroi latérale 16 du corps 15.

Cette diminution locale de hauteur dans la paroi latérale 18 forme une encoche dans la paroi latérale 18 du cadre 17 qui délimite ladite deuxième partie 14B d'ouverture d'entrée.

Ici, deux encoches, c'est-à-dire deux deuxièmes parties 14B d'ouverture d'entrée, sont formées sur les panneaux droits 18B opposés de la paroi latérale 18 du cadre 17.

En outre, l'encoche ménagée dans le bord libre du cadre 17 est située en regard de l'encoche correspondante ménagée dans la platine-support 12. Chaque deuxième partie 14B d'ouverture d'entrée est destinée à venir en correspondance avec l'une des premières parties 14A d'ouverture d'entrée formée sur l'un des autres panneaux droits 13B opposés de la paroi latérale 13 de la platine-support 12.

Ainsi, la combinaison d'une première partie 14A d'ouverture d'entrée de la paroi latérale 13 de la platine-support 12 avec une deuxième partie 14B d'ouverture d'entrée de la paroi latérale 18 du cadre 17, lors de l'assemblage de la platine-support 12 et du cadre 17 décrit ci-après, forme une ouverture d'entrée complète. Ici, comme le montrent les figures 1 à 4, deux ouvertures d'entrée complètes sont formées sur deux panneaux opposés de la paroi latérale 16 du corps 15. En variante, les ouvertures d'entrée pourraient être formées sur deux panneaux adjacents de la paroi latérale du corps.

Comme mentionné précédemment, de manière similaire à la paroi latérale 13 de la platine-support 12, le bord arrière 18C de la paroi latérale 18 du cadre 17 présente, le long de chaque deuxième partie 14B d'ouverture d'entrée formée dans chaque panneau droit 18B correspondant, une forme particulière qui délimite la gorge 14C ouverte vers l'arrière. Cette gorge 14C est également destinée à recevoir, par coulissement, la deuxième partie 51B ; 61B ; 71B de l'embout 50.

En dehors de la partie qui longe chaque deuxième partie 14B d'ouverture d'entrée, le bord arrière 18C de la paroi latérale 18 du cadre 17 présente une nervure 18D adaptée à s'insérer ou à s'emboîter dans la gorge 13D formée le long du bord avant 13C de la paroi latérale 13 de la platine-support 12, lors de l'assemblage de la platine-support 12 et du cadre 17 (figure 2).

En variante, la gorge peut évidemment être prévue sur le bord arrière de la partie avant de la boîte électrique et la nervure sur le bord avant de la partie arrière de la boîte électrique.

Le joint périphérique 40 décrit précédemment et permettant d'établir une jonction étanche entre le bord avant 13C de la paroi latérale 13 de la platine-support 12 et le bord arrière 18C de la paroi latérale 18 du cadre 17 est donc positionné entre des faces de ladite gorge 13D et de ladite nervure 18D.

En outre, pour assurer l'étanchéité de la boîte électrique 10, un joint d'étanchéité est également interposé entre la plaquette support 52 ; 62 ; 72 de chaque embout 50 ; 60 ; 70 et les parois latérales 13, 18 de la platine-support 12 et du cadre 17. Plus précisément, comme visible sur les figures 9, 17 et 18, la face interne 522 ; 622 ; 722 de la plaquette support 52 ; 62 ; 72 comporte une rainure 56 ; 66 ; 76 qui entoure l'ouverture 50A ; 60A ; 70A et accueille un joint d'étanchéité 90 (visible uniquement sur la figure 10) surmoulé. La rainure 56 ; 66 ; 76 débouche sur deux parties latérales du bord périphérique externe 52B ; 62B ; 72B de la plaquette support 52 ; 62 ; 72 de manière à ce que le joint d'étanchéité de l'embout 50 ; 60 ; 70 viennent au contact du joint d'étanchéité 40 logé dans la gorge 13C de la platine-support 12, dans la continuité de ce joint d'étanchéité 40. L'étanchéité latérale de la boîte électrique 10 est donc assurée de manière continue.

L'emboîtement de la nervure 18D du cadre 17 dans la gorge de la platine-support 12 assure un blocage relatif du cadre 17 par rapport à la platine-support 12 dans un plan (x, y) parallèle au plan de la cloison ou paroi murale. En revanche, cet emboîtement ne permet pas de bloquer le cadre 17 par rapport à la platine-support 12 selon un axe z orthogonal au plan de ladite cloison ou paroi murale.

Pour assurer ce blocage, la platine-support 12 et le cadre 17 comprennent des moyens d'attache complémentaires destinés à verrouiller l'assemblage du cadre 17 sur la platine-support 12. Ces moyens d'attache complémentaires sont ici des moyens d'encliquetage déverrouillables.

Il est prévu ici quatre jeux de moyens d'attache complémentaires respectivement situés aux quatre coins de la boîte électrique 10. Cela permet d'assurer une fixation robuste du cadre 17 sur la platine-support 12 tout en libérant de l'espace à l'intérieur de la boîte électrique 10 pour permettre un agencement optimisé des câbles électriques.

Comme le montrent les figures 2, 4 et 5, chaque moyen d'attache prévu sur la platine-support 12 se présente sous la forme d'un cran 100A formé d'une seule pièce avec la platine-support 12, ici par moulage d'une matière plastique.

Chaque cran 100A s'étend en saillie de la face intérieure de chaque portion en angle de la paroi latérale 13 de la platine-support 12 et présente un profil pointu tourné vers l'intérieur.

Comme le montrent les figures 2 et 4, chaque moyen d'attache prévu sur le cadre 17 et destiné à coopérer avec chaque cran 100A de la platine-support 12 est porté par un levier 110. Chaque levier 110 est formé d'une seule pièce avec la paroi latérale 18 du cadre 17 et s'étend en saillie de la face intérieure de chaque portion en angle de cette paroi latérale 18.

Comme le montrent les figures 2 et 4, chaque levier 110 se présente sous la forme d'une plaquette rectangulaire 111 bordée de deux flancs de rigidification 112.

Chaque levier 110 est rattaché à la paroi latérale 18 du cadre 17 uniquement par son extrémité avant. Il est élastiquement déformable au niveau de sa jonction avec la paroi latérale 18 du cadre 17, qui forme alors une charnière.

Comme le montrent les figures 2 et 4, chaque levier 110 présente une ouverture 115 adaptée à s'engager sur le cran 100A correspondant de la platine-support 12. Cette ouverture 115 présente notamment un bord 115A (figure 4) adapté à s'accrocher sur une face arrière du cran 100A de manière à verrouiller le cadre 17 sur la platine-support 12.

L'extrémité arrière de chaque levier 110 est recourbée vers l'intérieur du cadre 17 de façon à former un rebord 116. Ce rebord 116 comprend une fente 117 dans laquelle l'extrémité d'un outil tel qu'un tournevis peut être introduite, par exemple pour désengager le cran 100A du levier 110 afin de libérer le levier 110 (et donc détacher le moyen d'attache du cadre 17 de celui de la platine-support 12).

On notera que lorsque le cadre 17 muni de sa rehausse 19 est emboîté sur la platine-support 12, la boîte électrique 10 présente une paroi latérale de hauteur totale H (figures 1 et 2).

Lors du montage de l'appareillage électrique 1 en saillie sur une cloison murale, l'installeur fixe d'abord la platine-support 12 sur le mur en introduisant des vis dans les orifices 12C de forme oblongue et en ajustant cette fixation en rotation avant d'introduire des vis dans les orifices circulaires 12A (figures 2, 4 et 5).

Ensuite, l'installateur introduit un câble électrique ou un tube ou une gaine électrique au travers de la membrane d'étanchéité 54 de l'embout 50. Puis, selon une première alternative de montage, il insère la plaquette-support 52 de cet embout 50 passe-câble dans la gorge 13D formée dans la paroi latérale 13 de la platine-support 12, le long de la première partie 14A d'ouverture d'entrée.

L'insertion du câble électrique 80 dans l'embout 50 est plus particulièrement représentée de manière schématique sur les figures 11 à 16, dans le cas du premier mode de réalisation de l'embout 50. Cette insertion est similaire dans le cas d'un tube ou d'une gaine électrique.

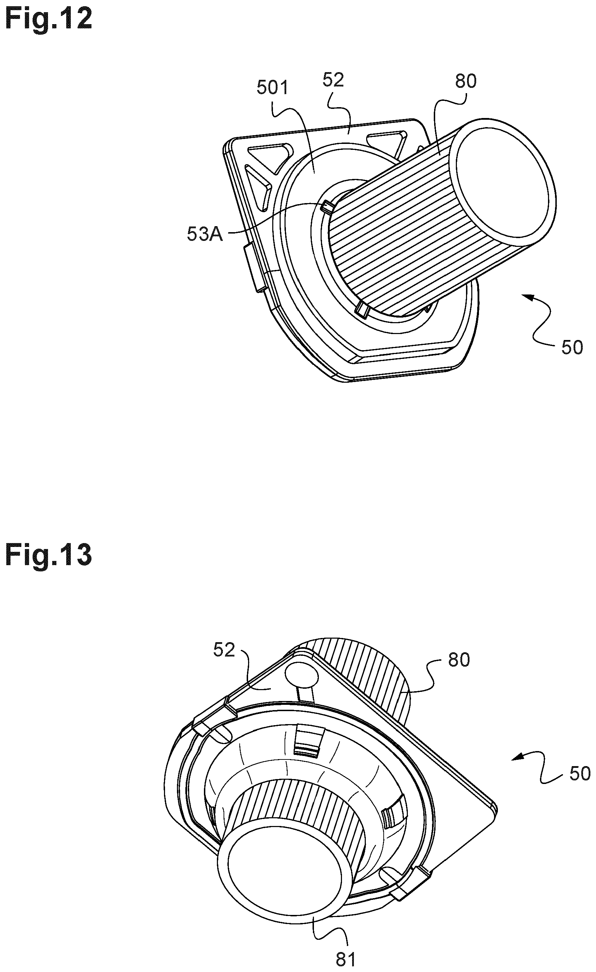

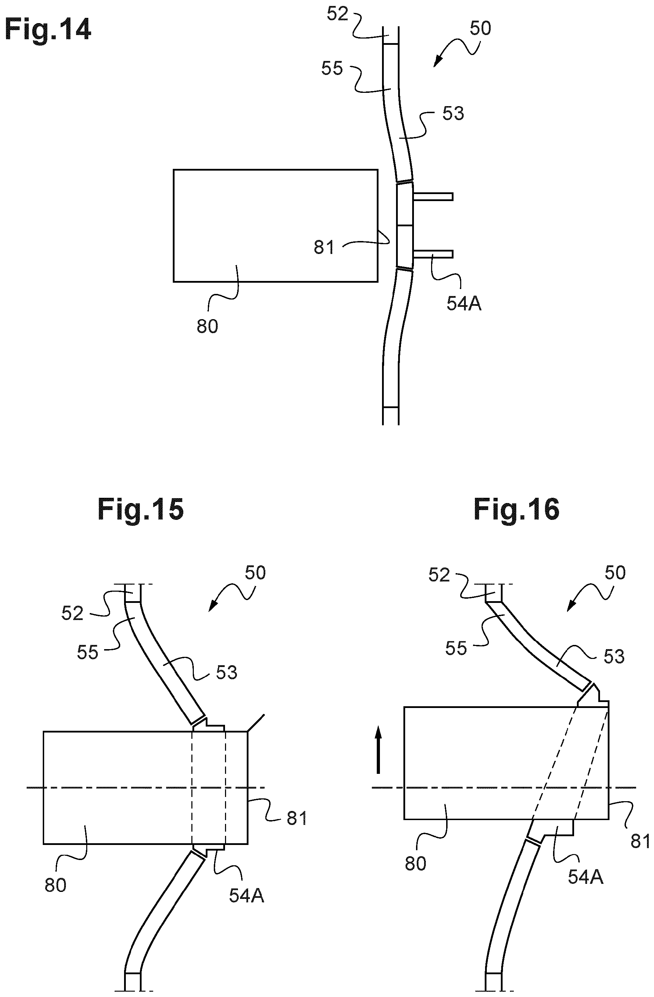

Le câble électrique 80 ou le tube ou la gaine électrique est approché de la face d'entrée 501 de l'embout 50 (figures 11 et 14). Son extrémité longitudinale 81 est appliquée contre cette face d'entrée 501 (figure 12). L'extrémité longitudinale 81 du câble électrique 80 entre en contact avec les parties 53A des éléments rigides 53 de l'embout 50 (figure 12). Lorsque l'installateur exerce une pression sur la membrane 54 par l'intermédiaire du câble électrique 80, l'extrémité longitudinale 81 du câble électrique glisse sur les parties 53A des éléments rigides 53 de l'embout 50. La pression exercée sur ces parties 53A des éléments rigides 53 entraîne le fléchissement des éléments de charnière 55. En conséquence, elle entraîne le déplacement des éléments rigides 53 vers l'intérieur de la boîte électrique 10 (figures 13 et 15). Ceux-ci s'écartent les uns des autres pour laisser passer le câble électrique, la gaine ou le tube.

Ce faisant, la membrane 54 comprise entre les éléments rigides 53 s'étire puis se déchire (figure 15), autorisant le passage du câble électrique 80 à travers la membrane 54.

Les extrémités libres des éléments rigides 53 restent en butée contre la paroi latérale du câble électrique 80, ce qui maintient également la membrane 54 déchirée autour du câble électrique 80. Avantageusement, l'une des lèvres 54A, 54B ou relief 54C s'applique autour du câble électrique 80 de manière à garantir l'étanchéité de la liaison entre la membrane 54 et le câble électrique 80 (figures 15 et 16).

En outre, avantageusement, il est possible, grâce à la présence des éléments rigides 53 dans l'embout 50, de déplacer légèrement le câble électrique 80 de façon transverse dans l'ouverture 50A de l'embout 50 de manière à aligner le câble électrique 80 sur une position de référence non centrée sur cette ouverture 50A, sans endommager la membrane 54 et en préservant l'étanchéité de la boîte électrique 10.

Il est en effet possible, comme représenté sur la figure 16, de déplacer le câble électrique 80 selon une direction orthogonale à l'axe longitudinal de ce câble électrique 80 (flèche de la figure 16), pour rattraper un positionnement de la boîte électrique légèrement décalé par rapport au cheminement du câble électrique 80. Lors d'un tel mouvement transverse du câble électrique 80, le déplacement des éléments rigides 53 vers l'intérieur de la boîte électrique et la déformation contrôlée de la membrane entre les éléments rigides 53 permet de conserver l'étanchéité de la liaison entre l'embout 50 et le câble électrique 80 (figure 16).

Dans le cas des deuxième et troisième modes de réalisation, le fonctionnement de l'embout 60 ; 70 est similaire. L'utilisation du deuxième mode de réalisation de l'embout est cependant limité à des câbles électriques, gaines ou tubes ayant un diamètre proche de celui de l'anneau circulaire formant l'élément rigide 63.

Dans le cas du troisième mode de réalisation de l'embout 70, le déplacement transverse du câble électrique est principalement permis selon la direction T définie par la droite passant entre les éléments rigides 73.

L'installateur positionne ensuite le mécanisme d'appareillage électrique 20 sur les montants 200 de la platine-support 12. Comme le montre la figure 4, l'embout 50, lorsqu'il est introduit dans la paroi latérale 13 de la platine-support 12, présente une hauteur supérieure à celle de la paroi latérale 13 de la platine-support 12 et pourrait gêner le raccordement électrique du mécanisme d'appareillage électrique 20 (c'est-à-dire l'insertion de chaque fil de raccordement électrique dans chaque borne électrique, via chaque ouverture d'accès 25, 26 correspondante du mécanisme d'appareillage électrique 20). Mais, de manière avantageuse ici, l'installateur tire profit, d'une part, de la faible hauteur de la paroi latérale 13 de la platine-support 12 (en dehors des embouts passe-câble) afin d'accéder à l'intérieur de la platine-support 12, et, d'autre part, que les ouvertures d'accès 25, 26 aux bornes électriques du socle du mécanisme d'appareillage électrique 20 rapporté sur les montants 200 de la platine-support 12, soient positionnées en retrait de cette paroi latérale 13 pour réaliser très aisément ce raccordement électrique.

Comme les moyens de butée présents sur les montants 200 permettent de positionner le socle du mécanisme d'appareillage 20 à distance de la paroi de fond 11 de la platine-support 12, l'installateur peut agencer les fils de raccordement électrique afin qu'ils ne soient pas pincés et de manière à limiter l'encombrement dans la boîte électrique 10.

Selon une deuxième alternative de montage, une fois le câble électrique ou le tube ou la gaine électrique introduit dans l'embout passe-câble 50, l'installateur raccorde électriquement le mécanisme d'appareillage électrique 20. Puis il insère la plaquette-support 52 de cet embout passe-câble 50 dans la gorge formée dans la paroi latérale 13 de la platine-support 12, le long d'une première partie 14A d'ouverture d'entrée tout en positionnant le mécanisme d'appareillage électrique 20 sur les montants 200 de la platine-support 12. L'installateur tire également profit ici de la faible hauteur de la paroi latérale 13 de la platine-support 12 et de la distance entre le socle du mécanisme d'appareillage électrique 20 et la paroi de fond 11 de la platine-support 12 pour agencer les fils de raccordement électrique.

Une fois le mécanisme d'appareillage électrique 20 monté et raccordé électriquement, l'installateur assemble, sur la platine-support 12, le cadre 17 muni de sa rehausse 19, par emboitement grâce aux moyens de montage complémentaires et par encliquetage grâce aux moyens d'attache complémentaires.

Ce faisant, l'installateur fait glisser la deuxième partie 51B ; 61B ; 71B de la plaquette support 52 ; 62 ; 72 de chaque embout 50 ; 60 ; 70 dans la gorge 14C du cadre 17.

Le cadre 17 permet une protection mécanique et électrique du mécanisme d'appareillage électrique 20 ainsi que des fils de raccordement électrique logés à l'intérieur de la boîte électrique 10. Enfin, l'installateur monte l'enjoliveur 30 dans les orifices 30A de la partie avant 18B de la paroi latérale 18 du cadre 17 afin de fermer hermétiquement l'ouverture avant de la boîte électrique 10 et de donner sa fonction à l'appareillage électrique 1 (figures 1 et 2).

La présente invention n'est pas limitée aux modes de réalisation décrits et représentés sur les différentes figures, mais l'homme du métier saura y apporter toute variante conforme à son esprit.

En particulier, on a décrit ici le cas d'une boîte électrique en deux parties présentant une forme spécifique particulièrement avantageuse. Cependant, l'embout passe-câble objet de la présente invention peut être incorporé dans d'autres types de boîtes électriques. A ce titre, l'invention concerne également une boîte électrique pourvue d'un corps, comprenant une paroi de fond pourvue de moyens de fixation à un support de réception et une paroi latérale bordant ladite paroi de fond qui délimite un logement adapté à recevoir un mécanisme d'appareillage électrique, dans laquelle au moins l'une desdites paroi de fond et paroi latérale comprend une ouverture munie de moyens de réception adaptés à recevoir un embout passe-câble étanche tel que décrit précédemment.

Notamment, la boîte électrique selon l'invention peut présenter de manière classique une paroi latérale en une seule partie, dans laquelle est ménagée une encoche adaptée à recevoir ledit embout passe-câble.

En outre, en variante, il pourrait s'agir d'une boîte multiposte, présentant une section de forme rectangulaire et définissant deux ou trois postes. Dans cette variante, la boîte électrique comportera de préférence un cadre définissant plusieurs ouvertures, chacune étant destinée à recevoir un poste.

## Revendications

1. Embout (50 ; 60 ; 70) passe-câble étanche comportant une face d'entrée (501) pour l'introduction d'un câble électrique (80) ou d'un tube, ou d'une gaine électrique dans une boîte électrique (10) pour appareillage électrique, comportant :
- une plaquette support (52 ; 62 ; 72) munie d'un bord périphérique interne (52A ; 62A; 72A) qui délimite une ouverture (50A ; 60A ; 70A) pour le passage du câble électrique (80) ou du tube, ou de la gaine électrique,
- au moins un élément rigide (53 ; 63 ; 73) s'étendant dans une zone de ladite ouverture (50A ; 60A ; 70A) comprise entre ledit bord périphérique interne (52A ; 62A; 72A) de la plaquette support (52 ; 62 ; 72) et le centre (O1 ; O2 ; O3) de ladite ouverture (50A ; 60A ; 70A), chaque élément rigide (53; 63 ; 73) laissant libre une zone centrale de la membrane (54),
- une membrane (54) d'étanchéité souple et perforable, surmoulée au moins partiellement sur ladite plaquette support (52 ; 62 ; 72), qui obture ladite ouverture (50A ; 60A ; 70A) et qui est adaptée à être traversée par le câble électrique (80) ou le tube, ou la gaine électrique, chaque élément rigide (53 ; 63 ; 73) étant plus rigide et moins déformable que la membrane (54),
**caractérisé en ce que** chaque élément rigide (53 ; 63 ; 73) est partiellement noyé dans la membrane (54) et présente une partie (53A ; 63A ; 73A) non recouverte par ladite membrane (54) de manière à être directement accessible audit câble électrique (80) ou au tube, ou à la gaine électrique du côté de la face d'entrée (501) de l'embout (50 ; 60 ; 70) et est relié au bord périphérique interne (52A; 62A ; 72A) de ladite plaquette support (52 ; 62 ; 72) par un élément de charnière (55 ; 65 ; 75) afin de former une zone d'appui mobile sur l'embout (50 ; 60 ; 70) pour le câble électrique (80), le tube ou la gaine électrique à introduire à travers la membrane (54).

2. Embout (50 ; 60 ; 70) étanche selon la revendication 1, dans lequel une face principale externe (531 ; 631 ; 731) dudit élément rigide (53 ; 63 ; 73), s'étend au moins partiellement dans le prolongement d'une face (541) de la membrane (54).

3. Embout (50 ; 60 ; 70) étanche selon l'une des revendications 1 et 2, dans lequel ledit élément rigide (53; 63 ; 73) se présente sous la forme d'un élément sensiblement plat comprenant deux faces principales externe (531, 631; 731) et interne (532 ; 632, 732) opposées, au moins une partie de l'une de ces deux faces principales externe (531; 631 ; 731) étant non recouverte par la membrane (54) et correspondant à la partie (53A ; 63A; 73A) non recouverte.

4. Embout (50 ; 60 ; 70) étanche selon l'une des revendications 1 à 3, dans lequel ledit élément rigide (53 ; 63 ; 73) est rattaché directement au bord périphérique interne (52B ; 62B ; 72B) de la plaquette support (52 ; 62 ; 72).

5. Embout étanche selon l'une des revendications 1 à 3, dans lequel ledit élément rigide s'étend à distance du bord périphérique interne de la plaquette support, sans être en contact avec celui-ci.

6. Embout (50) étanche selon l'une des revendications 1 à 5, dans lequel ledit élément rigide (53) comprend une languette s'étendant radialement dans l'ouverture (50A) de la plaquette support (52).

7. Embout (60) étanche selon l'une des revendications 1 à 5, dans lequel ledit élément rigide (63) comprend un anneau continu.

8. Embout (50 ; 70) étanche selon l'une des revendications 1 à 6, dans lequel il est prévu une pluralité d'éléments rigides (53 ; 73), répartis autour du centre (O1 ; O3) de l'ouverture (50A ; 70A) de la plaquette support (52 ; 72).

9. Embout (60) étanche selon l'une des revendications 1 à 7, dans lequel il est prévu un unique élément rigide (63).

10. Embout (50 ; 60 ; 70) étanche selon l'une des revendications 1 à 9, dans lequel chaque élément rigide (53 ; 63 ; 73) est mobile par rapport au bord périphérique interne (52A ; 62A; 72A) de la plaque support (52 ; 62 ; 72), au moins entre une position dans laquelle il s'étend dans le plan de l'ouverture (50A ; 60A ; 70A) de la plaquette support (52 ; 62 ; 72) et une position dans laquelle il s'étend au moins partiellement à l'arrière de cette plaquette support (52 ; 62 ; 72).

11. Embout (50 ; 60 ; 70) étanche selon l'une des revendications 1 à 10, dans lequel chaque élément rigide (53 ; 63 ; 73) est mobile par rapport au bord périphérique interne (52A ; 62A; 72A) de la plaque support (52 ; 62 ; 72), dans le plan de l'ouverture (50A ; 60A ;70A) de la plaquette support.

12. Boîte électrique pourvue d'un corps, comprenant un embout passe-câble étanche selon l'une des revendications 1 à 11, une paroi de fond pourvue de moyens de fixation à un support de réception et une paroi latérale bordant ladite paroi de fond qui délimite un logement adapté à recevoir un mécanisme d'appareillage électrique, dans laquelle au moins l'une desdites paroi de fond et paroi latérale comprend une ouverture munie de moyens de réception adaptés à recevoir ledit embout passe-câble étanche.

13. Boîte électrique (10) selon la revendication 12, dans laquelle ledit corps (15) comprend, d'une part, une partie arrière (12) comportant la paroi de fond (11) pourvue desdits moyens de fixation (12A) au support de réception et une paroi latérale (13) bordant ladite paroi de fond (11), et, d'autre part, une partie avant (17) comprenant une paroi latérale (18) rapportée sur ladite partie arrière (12) de manière que la paroi latérale (18) de la partie avant (17) s'étende dans le prolongement de la paroi latérale (13) de la partie arrière (12) pour former avec cette dernière ladite paroi latérale (16) du corps (15), dans laquelle le bord libre (13C, 18C) d'au moins l'une desdites parois latérales (13 , 18) des parties arrière (12) et avant (17) comprend une encoche adaptée à recevoir partiellement ledit embout (50) passe-câble étanche.

14. Boîte électrique selon la revendication 13, dans laquelle le bord libre de chaque paroi latérale (13, 18) des parties arrière (12) et avant (17) comportant une encoche, l'encoche ménagée dans le bord libre de la partie avant (17) est située en regard de l'encoche correspondante ménagée dans la partie arrière (12) dudit corps (15).

15. Boîte électrique (10) selon l'une des revendications 13 et 14, dans laquelle deux encoches sont ménagées dans deux portions (13A, 13B; 18A, 18B) opposées de ladite au moins une desdites parois latérales (13 ; 18).

16. Boîte électrique (10) selon l'une des revendications 13 à 15, dans laquelle la paroi latérale (13, 18) dans laquelle ladite encoche est ménagée comprend, autour de ladite encoche, une gorge (14C, 13D) de réception de la plaquette support de l'embout (50; 60 ; 70).

17. Appareillage électrique comprenant une boîte électrique selon l'une des revendications 12 à 16et un mécanisme (20) d'appareillage électrique reçu dans le logement délimité dans ladite boîte électrique (10).

## Patentansprüche

1. Abgedichtete Kabeldurchführung (50; 60; 70) mit einer Eingangsseite (501) zum Einführen eines Stromkabels (80) oder eines Rohrs oder eines Kabelschlauchs in ein elektrisches Gehäuse (10) für elektrische Geräte mit:
- einer mit einem inneren umlaufenden Rand (52A; 62A; 72A), der eine Öffnung (50A; 60A; 70A) zum Durchführen des elektrischen Kabels (80) oder des Rohrs oder des Kabelschlauchs begrenzt, versehenen Trägerplatte (52; 62; 72),
- mindestens einem starren Element (53; 63; 73), das sich in einem Bereich der Öffnung (50A; 60A; 70A) zwischen dem inneren umlaufenden Rand (52A; 62A; 72A) der Trägerplatte (52; 62; 72) und der Mitte (O1; 02; 03) der Öffnung (50A; 60A; 70A) erstreckt, wobei jedes starre Element (53; 63; 73) einen zentralen Bereich der Membrane (54) frei läßt,
- einer weichen und perforierbaren, mindestens teilweise auf die Trägerplatte (52; 62; 72) aufgeformten Abdichtungsmembrane (54), die die Öffnung (50A; 60A; 70A) verschließt und die dazu ausgelegt ist, vom elektrischen Kabel (80) oder dem Rohr oder dem Kabelschlauch durchquert zu werden, wobei jedes starre Element (53; 63; 73) starrer und weniger verformbar als die Membrane (54) ist,
**dadurch gekennzeichnet, daß** jedes starre Element (53; 63; 73) teilweise in der Membrane (54) versenkt ist und einen durch die Membrane (54) nicht abgedeckten Teil (53A; 63A; 73A) aufweist, so daß es für das elektrische Kabel (80) oder das Rohr oder den Kabelschlauch auf der Seite der Eingangsseite (501) der Durchführung (50; 60; 70) direkt zugänglich ist und mit dem inneren umlaufenden Rand (52A; 62A; 72A) der Trägerplatte (52; 62; 72) durch ein Scharnierelement (55; 65; 75) verbunden ist, um für das durch die Membrane (54) hindurch einzuführende elektrische Kabel (80) oder das Rohr oder den Kabelschlauch auf der Durchführung (50; 60; 70) einen beweglichen Druckbereich zu bilden.

2. Abgedichtete Durchführung (50; 60; 70) gemäß Anspruch 1, bei der sich eine Hauptaußenseite (531; 631; 731) des starren Elements (53; 63; 73) mindestens teilweise in Verlängerung einer Seite (541) der Membrane (54) erstreckt.

3. Abgedichtete Durchführung (50; 60; 70) gemäß einem der Ansprüche 1 und 2, bei der das starre Element (53; 63; 73) in Form eines im Wesentlichen flachen Elements mit einer äußeren (531; 631; 731) und einer gegenüberliegenden inneren (532; 632; 732) Hauptaußenseite vorliegt, wobei mindestens ein Teil einer der beiden Hauptaußenseiten (531; 631; 731) von der Membrane (54) nicht bedeckt ist und dem nicht bedeckten Teil (53A; 63A; 73A) entspricht.

4. Abgedichtete Durchführung (50; 60; 70) gemäß einem der Ansprüche 1 bis 3, bei der das starre Element (53; 63; 73) direkt mit dem umlaufenden inneren Rand (52B; 62B; 72B) der Trägerplatte (52; 62; 72) verbunden ist.

5. Abgedichtete Durchführung gemäß einem der Ansprüche 1 bis 3, bei der sich das starre Element in einem Abstand vom inneren umlaufenden Rand der Trägerplatte erstreckt, ohne mit diesem in Kontakt zu kommen.

6. Abgedichtete Durchführung (50) gemäß einem der Ansprüche 1 bis 5, bei der das starre Element (53) eine sich radial in der Öffnung (50A) der Trägerplatte (52) erstreckende Zunge aufweist.

7. Abgedichtete Durchführung (60) gemäß einem der Ansprüche 1 bis 5, bei der das starre Element (63) einen durchgehenden Ring aufweist.

8. Abgedichtete Durchführung (50; 70) gemäß einem der Ansprüche 1 bis 6, bei der eine Anzahl um die Mitte (O1; O3) der Öffnung (50A; 70A) der Trägerplatte (52; 72) verteilter starrer Elemente (53; 73) vorgesehen ist.

9. Abgedichtete Durchführung (60) gemäß einem der Ansprüche 1 bis 7, bei der ein einziges starres Element (63) vorgesehen ist.

10. Abgedichtete Durchführung (50; 60; 70) gemäß einem der Ansprüche 1 bis 9, bei der jedes starre Element (53; 63; 73) gegenüber dem inneren umlaufenden Rand (52A; 63A; 73A) der Trägerplatte (52; 62; 72) mindestens zwischen einer Position, in der es sich in der Ebene der Öffnung (50A; 60A; 70A) der Trägerplatte (52; 62; 72) erstreckt, und einer Position, in der es sich mindestens teilweise auf der Rückseite dieser Trägerplatte (52; 62; 72) erstreckt, bewegbar ist.

11. Abgedichtete Durchführung (50; 60; 70) gemäß einem der Ansprüche 1 bis 10, bei der jedes starre Element (53; 63; 73) gegenüber dem inneren umlaufenden Rand (52A; 63A; 73A) der Trägerplatte (52; 62; 72) in der Ebene der Öffnung (50A; 60A; 70A) der Trägerplatte bewegbar ist.

12. Elektrisches Gehäuse mit einem Körper, das eine abgedichtete Durchführung gemäß einem der Ansprüche 1 bis 11, eine mit Mitteln zum Befestigen an einem Aufnahmeträger versehene Bodenwand und eine an die Bodenwand angrenzende Seitenwand, die eine Aufnahme abgrenzt, die dazu ausgelegt ist, einen Mechanismus eines elektrischen Geräts aufzunehmen, aufweist, bei dem mindestens eine der besagten Bodenwand und Seitenwand eine mit Aufnahmemitteln versehene Öffnung aufweist, die dazu ausgelegt sind, die abgedichtete Kabeldurchführung aufzunehmen.

13. Elektrisches Gehäuse (10) gemäß Anspruch 12, bei dem der Körper (15) einerseits einen hinteren Teil (12), der die mit den Mitteln (12A) zum Befestigen am Aufnahmeträger versehene Bodenwand (11) und eine an die Bodenwand (11) angrenzende Seitenwand (13) aufweist, und andererseits einen vorderen Teil (17) mit einer am hinteren Teil (12) so angebrachten Seitenwand (18), daß sich die Seitenwand (18) des vorderen Teils (17) in Verlängerung der Seitenwand (13) des hinteren Teils (12) erstreckt, um mit letzterer die Seitenwand (16) des Körpers (15) zu bilden, aufweist, bei dem der freie Rand (13C, 18C) mindestens einer der Seitenwände (13, 18) des hinteren Teils (12) und des vorderen Teils (17) eine Aussparung aufweist, die dazu ausgelegt ist, die abgedichtete Kabeldurchführung (50) teilweise aufzunehmen.

14. Elektrisches Gehäuse gemäß Anspruch 13, bei dem der freie Rand jeder Seitenwand (13, 18) des hinteren Teils (12) und des vorderen Teils (17) eine Aussparung aufweist, wobei die im freien Rand des vorderen Teils (17) eingerichtete Aussparung gegenüber der entsprechenden, im hinteren Teil (12) des Körpers (15) eingerichteten Aussparung angeordnet ist.

15. Elektrisches Gehäuse (10) gemäß einem der Ansprüche 13 und 14, bei dem zwei Aussparungen in zwei gegenüberliegenden Abschnitten (13A, 13B; 18A, 18B) der mindestens einen der Seitenwände (13; 18) eingerichtet sind.

16. Elektrisches Gehäuse (10) gemäß einem der Ansprüche 13 bis 15, bei dem die Seitenwand (13; 18), in der die Aussparung eingerichtet ist, um die Aussparung herum eine Hohlkehle (14C, 13D) für die Aufnahme der Trägerplatte der Durchführung (50; 60; 70) aufweist.

17. Elektrisches Gerät mit einem elektrischen Gehäuse gemäß einem der Ansprüche 12 bis 16 und einem Mechanismus (20) eines in der im elektrischen Gehäuse (10) umgrenzten Vertiefung aufgenommenen elektrischen Geräts .

## Claims

1. A sealed cable entry grommet (50; 60; 70) having an inlet face (501) for inserting an electrical cable (80) or tube, or an electrical sheath into an electrical box (10) for electrical equipment, comprising:
- a support plate (52; 62; 72) provided with an inner peripheral edge (52A; 62A; 72A) that delimits an opening (50A; 60A; 70A) for the passage of the electric cable (80) or the tube, or the electric sheath,
- at least one rigid element (53; 63; 73) extending in an area of said opening (50A; 60A; 70A) between said inner peripheral edge (52A; 62A; 72A) of the support plate (52; 62; 72) and the centre (01; 02; 03) of said opening (50A; 60A; 70A), each rigid element (53; 63; 73) leaving a central area of the membrane (54) free,
- a flexible and pierceable sealing membrane (54), at least partially overmoulded on said support plate (52; 62; 72), which closes said opening (50A; 60A; 70A) and which is adapted to be passed through by the electrical cable (80) or the tube, or the electrical sheath, each rigid element (53; 63; 73) being more rigid and less deformable than the membrane (54),
**characterised in that** each rigid element (53; 63; 73) is partially embedded in the membrane (54) and has a part (53A; 63A; 73A) not covered by said membrane (54) so as to be directly accessible to said electric cable (80) or to the tube, or to the electric sheath on the inlet face (501) side of the grommet (50; 60; 70) and is connected to the inner peripheral edge (52A; 62A; 72A) of said support plate (52; 62; 72) by a hinge element (55; 65; 75) so as to form a movable resting area on the grommet (50; 60; 70) for the electric cable (80), the tube or the electric sheath to be introduced through the membrane (54).

2. The sealed grommet (50; 60; 70) according to claim 1, wherein an external main face (531; 631; 731) of said rigid element (53; 63; 73) extends at least partially in the extension of a face (541) of the membrane (54).

3. The sealed grommet (50; 60; 70) according to claim 1 or claim 2, wherein said rigid element (53; 63; 73) is in the form of a substantially flat element comprising two external (531, 631; 731) and internal (532; 632, 732) main faces that are opposite, at least a part of one of these two external main faces (531; 631; 731) being uncovered by the membrane (54) and corresponding to the uncovered part (53A; 63A; 73A).

4. The sealed grommet (50; 60; 70) according to any one of claims 1 to 3, wherein said rigid member (53; 63; 73) is directly attached to the inner peripheral edge (52B; 62B; 72B) of the support plate (52; 62; 72).

5. The sealed grommet according to any one of claims 1 to 3, wherein said rigid member extends away from, but is not in contact with, the inner peripheral edge of the support plate.

6. The sealed grommet (50) according to any one of claims 1 to 5, wherein said rigid element (53) comprises a tab extending radially into the opening (50A) of the support plate (52).

7. The sealed grommet (60) according to any one of claims 1 to 5, wherein said rigid element (63) comprises a continuous ring.

8. The sealed grommet (50; 70) according to any one of claims 1 to 6, wherein a plurality of rigid elements (53; 73) are provided, distributed around the centre (01; 03) of the opening (50A; 70A) of the support plate (52; 72).

9. The sealed grommet (60) according to any one of claims 1 to 7, wherein a single rigid element (63) is provided.

10. The sealed grommet (50; 60; 70) according to any one of claims 1 to 9, wherein each rigid element (53; 63; 73) is movable relative to the inner peripheral edge (52A; 62A; 72A) of the support plate (52; 62; 72), at least between a position in which it extends in the plane of the opening (50A; 60A; 70A) of the support plate (52; 62; 72) and a position in which it extends at least partially to the rear of this support plate (52; 62; 72).

11. The sealed grommet (50; 60; 70) according to any one of claims 1 to 10, wherein each rigid element (53; 63; 73) is movable relative to the inner peripheral edge (52A; 62A; 72A) of the support plate (52; 62; 72), in the plane of the opening (50A; 60A;70A) of the support plate.

12. An electrical box provided with a body, comprising a sealed cable entry grommet according to any one of claims 1 to 11, a bottom wall provided with means for fixing to a reception support, and a side wall bordering said bottom wall that defines a housing adapted to receive an electrical equipment mechanism, wherein at least one of said bottom wall and side wall comprises an opening provided with reception means adapted to receive said sealed cable entry grommet.

13. The electrical box (10) according to claim 12, wherein said body (15) comprises, on the one hand, a rear part (12) comprising the bottom wall (11) provided with said means (12A) for fixing to the reception support and a side wall (13) bordering said bottom wall (11), and, on the other hand, a front part (17) comprising a side wall (18) attached to said rear part (12) so that the side wall (18) of the front part (17) extends in the extension of the side wall (13) of the rear part (12) so as to form therewith said side wall (16) of the body (15), wherein the free edge (13c, 18C) of at least one of said side walls (13 , 18) of the rear (12) and front (17) parts comprises a notch adapted to partially receive said sealed cable entry grommet (50).

14. The electrical box according to claim 13, wherein the free edge of each side wall (13, 18) of the rear (12) and front (17) parts comprises a notch, the notch arranged in the free edge of the front part (17) being situated opposite the corresponding notch arranged in the rear part (12) of the said body (15).

15. The electrical box (10) according to claim 13 or 14, wherein two notches are provided in two opposite parts (13A, 13B; 18A, 18B) of said at least one of said side walls (13; 18).

16. The electrical box (10) according to any one of claims 13 to 15, wherein the side wall (13, 18) in which said notch is arranged comprises, around said notch, a groove (14C, 13D) for receiving the tip support plate of the grommet (50; 60; 70).

17. Electrical equipment comprising an electrical box according to any one of claims 12 to 16 and an electrical equipment mechanism (20) received in the housing delimited in said electrical box (10).
